# EUROPEAN PATENT SPECIFICATION

(11) **EP 1 288 824 B1**
(45) Date of publication and mention of the grant of the patent: **11.04.2007**
(21) Application number: 02255039.6
(22) Date of filing: 17.07.2002
(51) Int. Cl.: G06Q 10/00, H04N 1/00

(54) **Facsimile device and control method thereof**
Faksimilegerät und Ansteuerungsverfahren dafür
Télécopieur et méthode de commande associée

(30) Priority: 18.07.2001 JP 2001217874
(43) Date of publication of application: 05.03.2003
(73) Proprietor: Ricoh Company, Ltd., Tokyo 143-8555 (JP)
(72) Inventor: Masatoshi, Inoue, Atsugi-shi, Kanagawa (JP)
(74) Representative: Leeming, John Gerard

(56) References cited:
- WO-A-00/78035
- DE-A- 19 811 103
- US-A- 6 104 500
- US-A- 6 157 706
- PATENT ABSTRACTS OF JAPAN vol. 2000, no. 07, 29 September 2000 (2000-09-29) & JP 2000 125072 A (CANON INC), 28 April 2000 (2000-04-28)

## Description

The present invention generally relates to a facsimile device and a control method of the facsimile device, and in particular to a facsimile device adapted for use in a communication network so as to receive and send an electronic mail (e-mail) via the communication network and a control method of such facsimile device.

Recently, an increasing number of facsimile devices adapted to networks in order to realize their multi-functionality are being developed. One of the functions to be realized by such facsimile devices is to provide, for example, a function of receiving and sending e-mails. However, in such function of receiving and sending e-mails of such facsimile devices, there is a disadvantage that even when an e-mail address is indicated in the contents of the received e-mail (in the message portion of the received e-mail), such e-mail address cannot be effectively utilized.

In other words, even when the e-mail address is indicated in the contents of the received e-mail, in order to send a new e-mail or a return e-mail to the indicated e-mail address, it is either necessary to store the e-mail address and then perform new address registration or to copy the e-mail address in the contents and then paste the relevant e-mail address in a field designated for the destination e-mail address in an e-mail creation screen when sending an e-mail to the relevant e-mail address.

WO-A-00/78035 relates to a method and apparatus for enabling a facsimile machine to send and receive e-mail without the use of a computer or internet connection. This document discloses a "fax-to-e-mail system server", which is configured to convert incoming e-mail messages to a format appropriate for facsimile machines, process the incoming message to derive a telephone number for the recipient facsimile machine from the address of the incoming message, address an image file representing the e-mail message to the telephone number thus derived, and transmit the image file to the recipient facsimile machine telephone number via a communication network.

JP-A-2000125072 discloses a facsimile machine configured to receive an electronic mail of a facsimile image sent from a personal computer, recognise the transmission source electronic mail address from the received electronic mail, and send an electronic mail back to the transmission source according to the recognised transmission source electronic mail address.

Accordingly, it is a general object of the present invention to provide a facsimile device and a control method of the facsimile device that facilitate registration of an e-mail address indicated in the received e-mail, as well as to realize a simple sending of e-mails to the registered e-mail address.

In order to achieve the above-mentioned object, according to one aspect of the present invention, there is proposed a facsimile device provided with a function of receiving and sending an electronic mail comprising:
an electronic mail address extraction means for extracting a character sequence representing an electronic mail address from contents of the electronic mail received through a communication line; and
a storage means for storing said character sequence extracted by said electronic mail address extraction means; characterized by further comprising:
   an origin name extraction means configured to extract a character sequence representing a name of the origin of the electronic mail from the contents of the received electronic mail,
wherein said storage means is configured to store said extracted character sequence representing the name of the origin of the electronic mail as a destination name and associate thereto said stored extracted character sequence representing the electronic mail address.

According to another aspect of the present invention, the facsimile device further comprises a display means for displaying a group of e-mail addresses stored in the storage means and a selection means for selecting a desired e-mail address from the group of e-mail addresses displayed by the display means. The display means then displays an e-mail creation screen with the selected e-mail address provided thereon.

According to another aspect of the present invention, the facsimile device further comprises an origin name extraction means for extracting a character sequence representing a name of the origin of the e-mail from the contents of the e-mail received. The storage means stores the extracted character sequence representing the name of the origin of the e-mail, as a destination name, and the stored extracted character sequence representing the electric mail address being associated thereto.

According to another aspect of the present invention, the facsimile device further comprises a display means for displaying the group of e-mail addresses as well as the destination names associated with the respective e-mail addresses, both stored in the storage means, and a selection means for selecting a desired e-mail address from the group of e-mail addresses and a corresponding destination name associated with the desired e-mail address. The display means then displays an electronic mail creation screen with the selected electronic mail address provided thereon.

According to another aspect of the present invention, the display means displays the destination name with respect to each e-mail address.

According to another aspect of the present invention, the facsimile device further comprises a registration means for registering a pair of the e-mail address and the destination name associated with the e-mail address, both stored in the storage means, to one of a plurality of simple selection buttons. By detecting depression of the one of the plurality of simple selection buttons, information of said pair of the e-mail address and the destination name associated with the e-mail address corresponding to the depressed button is read out and the e-mail creation screen with the pair provided thereon is displayed.

According to a further aspect of the present invention, there is provided a method of controlling a facsimile device provided with a function of receiving and sending an electronic mail, said method comprising the step of:
extracting a character sequence representing an electronic mail address from contents of the electronic mail received through a communication line; and
storing said character sequence extracted in said extraction step; characterized by further comprising:
   extracting a character sequence representing a name of the origin the electronic mail from the contents of the received electronic mail,
wherein during said storing step, said extracted character sequence representing the name of the origin of the electronic mail is stored as a destination name and said stored extracted character sequence representing the electronic mail address is associated thereto.

According to a further aspect of the present invention, the method further comprises the steps of displaying a group of e-mail addresses stored in the storing step, selecting a desired e-mail address from said group of e-mail addresses displayed in the displaying step, and displaying an e-mail creation screen with the selected e-mail address provided thereon.

According to a further aspect of the present invention, the method further comprises the step of extracting a character sequence representing a name of the origin of the e-mail from the contents of the received e-mail, wherein during the storing step, the extracted character sequence representing the name of the origin of the e-mail is stored as a destination name and the stored extracted character sequence representing the e-mail address being associated.

According to a further aspect of the present invention, the method further comprises the steps of displaying a group of e-mail addresses as well as the destination names associated with respective e-mail addresses stored in the storing step, selecting a desired e-mail address from the group of e-mail addresses and a corresponding destination name associated with the desired e-mail address, and displaying an e-mail creation screen with the selected e-mail address and the selected destination name associated with the selected e-mail address provided thereon.

According to a further aspect of the present invention, in the step of displaying the group of e-mail addresses as well as the destination names associated with the respective e-mail addresses stored in the storing step, the destination name is displayed with respect to each e-mail address.

According to a further aspect of the present invention, the method further comprises the steps of registering a pair of the e-mail address and the destination name associated with the e-mail address, both stored in the storing step, to one of a plurality of simple selection buttons, detecting depression of the one of the plurality of simple selection buttons, reading out the information of the pair of the e-mail address and the destination name associated with the e-mail address corresponding to the depressed button, and displaying the e-mail creation screen with the pair provided thereon.

It is noted that according to the present invention, the facsimile device and the control method thereof are enabled to extract a character sequence representing the e-mail address from the contents of the received e-mail and store the extracted e-mail address for later use. Therefore, a user can simply select one of the extracted e-mail addresses to be used as the destination address for the e-mail to be sent, obviating the possibility of erroneous inputs by the user manually typing the relevant e-mail address.

In addition, according to the present invention, the facsimile device and the control method thereof allow user-friendliness of the facsimile device when selecting the e-mail destination address to be improved by associating the extracted e-mail address with the destination name.

Further, according to the present invention, the facsimile device and the control method thereof allow the user-friendliness of the facsimile device when selecting the e-mail address to be further improved by associating the pair comprising the e-mail address and the destination name with one of the one-touch dial buttons.

The facsimile device and the control method of the facsimile device according to the present invention will be described in detail with reference to the exemplary embodiment and the accompanying drawings, in which:
FIG. 1 is a block diagram illustrating a schematic configuration of the facsimile device in one embodiment of the present invention;
FIG. 2 is a flow chart indicating a first operational flow of the facsimile device according to the embodiment of the present invention; and
FIG. 3 is a flow chart indicating a second operational flow of the facsimile device according to the embodiment of the present invention.

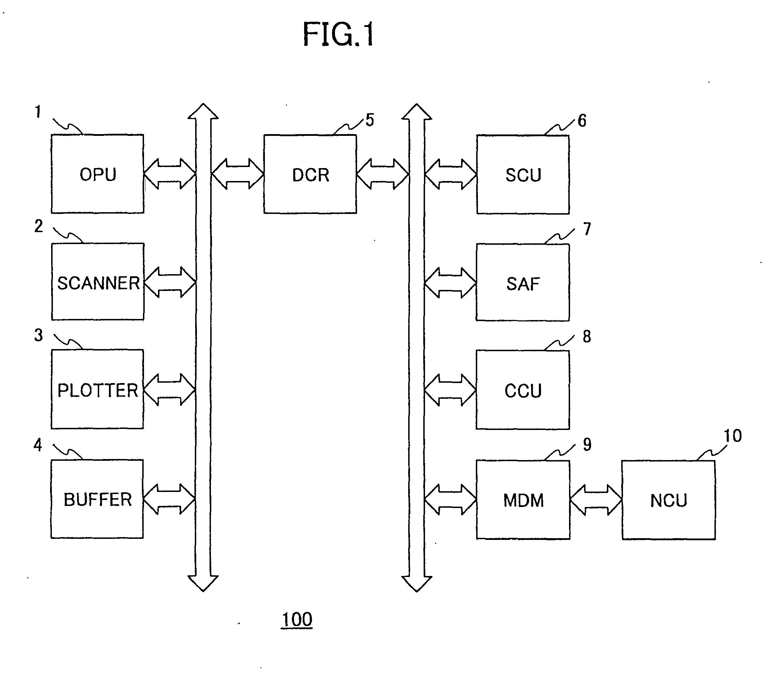

FIG. 1 through FIG. 3 represent an embodiment of the facsimile device and the control method thereof according to the present invention.

FIG. 1 is a block diagram illustrating a schematic configuration of the facsimile device in the preferred embodiment of the present invention. In FIG. 1, the facsimile device 100 according to the present invention includes an operation panel control unit (OPU) 1, a scanner 2, a plotter 3, a buffer 4, a data compression re-construction unit (DCR) 5, a system control unit (SCU) 6, an image accumulation unit (SAF memory) 7, a communication control unit (CCU) 8, a modem (MDM) 9, and a network control unit (NCU) 10.

The operation panel control unit 1 is, for example, a liquid crystal display (LCD) displaying an e-mail address and is equipped with a plurality of one-touch dial buttons, etc. The scanner 2 reads out image information (such as text, etc.). The plotter 3 prints the received text on a recording paper. The buffer 4 serves as an intermediate buffer when interacting with the peripheral devices. The data compression re-construction unit 5 compresses and expands the image information.

The system control unit 6 is equipped with a CPU and a main memory and is responsible for the overall operation of the facsimile device 100. The system control unit 6 not only interprets operational information, etc., input via the operation panel control unit 1, but also controls display information (such as guidance information or address information) to be displayed on the operation panel control unit 1. The system control unit 6 also serves as a system memory storing the e-mail addresses and destination names.

The image accumulation unit 7 serves as a SAF memory that accumulates the image information as a file. The communication control unit 8 controls communication of the facsimile device 100. The modem 9 has a function of a FAX modem that performs a usual facsimile receiving and sending and a function of a data communication modem that performs data (such as e-mail, etc.) communication. The network control unit 10 is connected to the communication line and not only checks the connection/disconnection states of the line but also is responsible for connection/disconnection to the Internet according to a switching signal from the communication control unit 8.

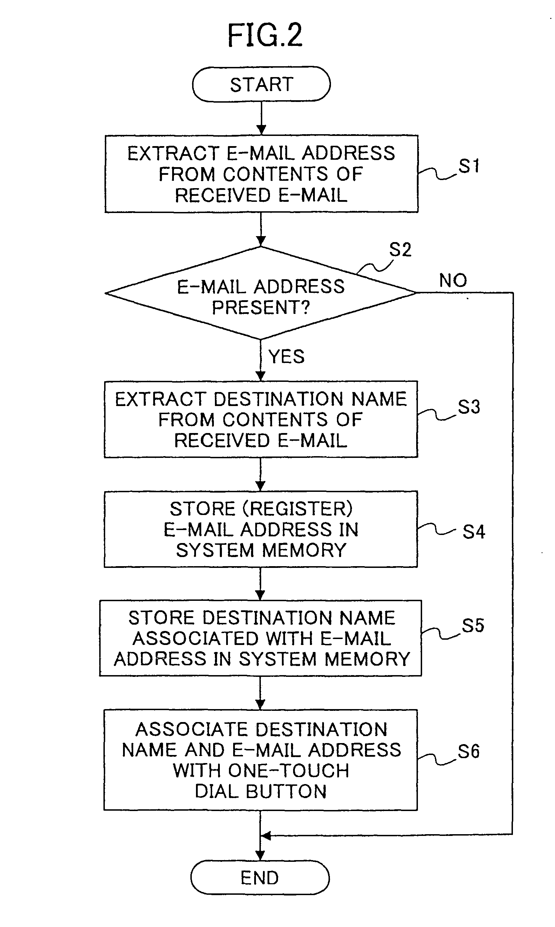

FIG. 2 is a flow chart indicating a first operational flow of the facsimile device according to the embodiment of the present invention. An automatic registration process of an e-mail address in the contents of the received e-mail is illustrated based on FIG. 2.

In step S1, an e-mail address is extracted from the contents of the received e-mail. The extraction of the e-mail address is performed, for example, based on the presence or absence of an alphanumeric sequence representing a user name before an at-mark (@) and an alphanumeric sequence representing a domain name for organizations and/or countries separated by a period (.) after the at-mark (in the case of Japan, an alphanumeric sequence representing a domain name is, for example, "co.jp"). In case there is no alphanumeric sequence representing an e-mail address, then the process ends (step S2-NO).

In case there is an alphanumeric sequence representing an e-mail address in the contents of the received e-mail (step S2-YES), an alphanumeric sequence representing a name of the origin of the e-mail is extracted from the contents of the received e-mail (step S3). The extraction of the name of the origin of the received e-mail is performed using a method of extracting the portion in the contents of the received e-mail that is enclosed by quotation marks such as "....." or a method of extracting an alphanumeric sequence representing a single word following the e-mail address. It is noted that in these methods of extracting, the name of the origin of the received e-mail may be arranged in advance as a destination name for the extracted e-mail address and may be registered in the facsimile device. When there is no alphanumeric sequence representing the destination name, the process simply carries on.

In step S4, the e-mail address extracted in step S1 is stored (registered) in a system memory (nonvolatile memory) of the system control unit 6. In addition, in step S5, the destination name extracted in step S3 is associated with the e-mail address and then registered in the system memory of the system control unit 6. It is noted that when there is no destination name extracted, only the e-mail address is stored in the system memory.

In step S6, the e-mail address (and the destination name) stored in the system memory of the system control unit 6 are associated with one of the plurality of one-touch dial buttons (simple selection buttons) provided on the operation panel control unit of the facsimile device of the present invention.

According to the first operational flow of the facsimile device of the present invention, when the e-mail address is indicated in the contents of the received e-mail, it is possible to automatically extract the e-mail address (and the destination name) and register it in the memory.

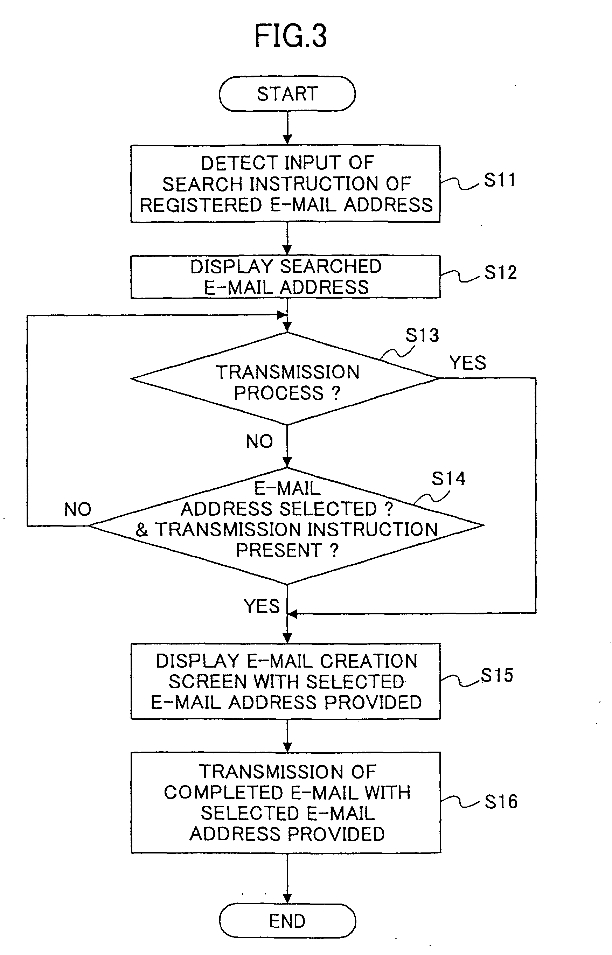

FIG. 3 is a flow chart indicating a second operational flow of the facsimile device according to the embodiment of the present invention. A display process of the registered e-mail address is illustrated based on FIG. 3.

In step S11, an input of a search instruction by a user through the operation panel control unit 1 comprised of an LCD, etc., is detected. The detection as mentioned herein means to detect an input of the selection instruction of a desired e-mail address among a plurality of e-mail addresses registered in the system memory or a depression of the one-touch dial button associated with one of the e-mail addresses registered in the system memory, wherein the input of the selection instruction and the depression of the button are performed by the user manipulating the buttons on the operation panel control unit following the guidance information presented on the LCD.

When the input of the search instruction is detected in step S11, the selected e-mail address or the e-mail address associated with the one-touch dial button is read out from the system memory of the system control unit 6 and is displayed on the operation panel control unit 1 (step S12).

In step S13, it is determined whether a transmission process for the e-mail address displayed on the operation panel control unit 1 is to be carried out. The transmission process includes such as scanning a manuscript and determining presence of a transmission instruction. When it is determined that the transmission process is to be carried out (step S13-YES), then an e-mail creation screen with the selected e-mail address provided thereon as the destination e-mail address is displayed (step S15). After completing the creation of the e-mail to be sent, the relevant e-mail is transmitted to the relevant e-mail address, in other words, the transmission process is completed (step S16).

When it is determined that the transmission process is not to be carried out (step S13-NO), the selection of e-mail address is confirmed and the presence of the transmission instruction for the selected e-mail address is determined. When there is no transmission instruction (step S14-NO), the process returns to step S13.

When the selected e-mail address is confirmed and there is a transmission instruction for the relevant e-mail address (step S14-YES), the e-mail creation screen with the selected e-mail address provided thereon as the destination e-mail address is displayed (step S15) and after the completing of the creation of the e-mail to be sent, the relevant e-mail is transmitted to the relevant e-mail address, in other words, the transmission process is completed (step S16).

According to the second operational flow of the present invention, the e-mail creation screen with the e-mail address selected by the selection instruction through the operation panel control unit from a group of e-mail addresses registered in the system memory or with the e-mail address associated with the one-touch dial button already provided thereon is displayed as a pop-up screen. Thus, the user need not manually input the e-mail address and therefore it is possible to obviate the possibility of erroneous inputs.

Further, the present invention is not limited to these embodiments, and variations and modifications may be made without departing from the scope of the present invention, which is defined by the appended claims.

## Claims

1. A facsimile device (100) provided with a function of receiving and sending an electronic mail comprising:
an electronic mail address extraction means for extracting a character sequence representing an electronic mail address from contents of the electronic mail received through a communication line; and
a storage means (6) for storing said character sequence extracted by said electronic mail address extraction means; **characterized by** further comprising:
an origin name extraction means configured to extract a character sequence representing a name of the origin of the electronic mail from the contents of the received electronic mail,
wherein said storage means (6) is configured to store said extracted character sequence representing the name of the origin of the electronic mail as a destination name and associate thereto said stored extracted character sequence representing the electronic mail address.

2. The facsimile device (100) as claimed in claim 1, said device further comprising:
a display means for displaying a group of electronic mail addresses stored in said storage means (6); and
a selection means for selecting a desired electronic mail address from said group of electronic mail addresses displayed by said display means,
wherein said display means displays an electronic mail creation screen with said selected electronic mail address provided thereon.

3. The facsimile device (100) as claimed in claim 1, said device further comprising:
a display means for displaying a group of electronic mail addresses as well as the destination names associated therewith, both stored in said storage means; and
a selection means for selecting a desired electronic mail address from said group of electronic mail addresses and a corresponding destination name associated therewith,
wherein said display means displays an electronic mail creation screen with said selected electronic mail address and said selected destination name associated therewith provided thereon.

4. The facsimile device (100) as claimed in claim 3, wherein said display means displays said destination name with respect to each electronic mail address.

5. The facsimile device (100) as claimed in claim 4, said device further comprising:
a registration means for registering a pair of said electronic mail address and a destination name associated therewith, both stored in said storage means (6), to one of a plurality of simple selection buttons,
wherein said facsimile device (100) is arranged to detect depression of said one of the plurality of simple selection buttons and, in response to a detected depression, read out information of said pair of said electronic mail address and said destination name associated therewith corresponding to said depressed simple selection button and display an electronic mail creation screen with said pair provided thereon, and
wherein said facsimile device (100) is configured so that, after completion of a creation of an electronic mail to be sent, said electronic mail is transmitted to said electronic mail address.

6. The facsimile device (100) as claimed in claim 1, wherein, in the case where a destination name cannot be obtained by said origin name extraction means, the device (100) is configured to store only the e-mail address in said storage means (6).

7. A method of controlling a facsimile device (100) provided with a function of receiving and sending an electronic mail, said method comprising the step of:
extracting a character sequence representing an electronic mail address from contents of the electronic mail received through a communication line; and
storing said character sequence extracted in said extraction step; **characterized by** further comprising:
extracting a character sequence representing a name of the origin the electronic mail from the contents of the received electronic mail,
wherein during said storing step, said extracted character sequence representing the name of the origin of the electronic mail is stored as a destination name and said stored extracted character sequence representing the electronic mail address is associated thereto.

8. The method as claimed in claim 7, said method further comprising the steps of:
displaying a group of electronic mail addresses stored in said storing step;
selecting a desired electronic mail address from said group of electronic mail addresses displayed in said displaying step; and
displaying an electronic mail creation screen with said selected electronic mail address provided thereon.

9. The method as claimed in claim 7, said method further comprising the steps of:
displaying a group of electronic mail addresses as well as the destination names associated therewith, both stored in said storing step;
selecting a desired electronic mail address from said group of electronic mail addresses and a corresponding destination name associated therewith; and
displaying an electronic mail creation screen with said selected electronic mail address and said selected destination name associated therewith provided thereon.

10. The method as claimed in claim 9, wherein said step of displaying said group of electronic mail addresses as well as the destination names associated with the respective electronic mail addresses stored in said storing step, said destination name is displayed with respect to each electronic mail address.

11. The method as claimed in claim 10, said method further comprising the steps of:
registering a pair of said electronic mail address and said destination name associated therewith, both stored in said storing step, to one of a plurality of simple selection buttons;
detecting depression of said one of the plurality of simple selection buttons;
reading out information of said pair of said electronic mail address and said destination name associated therewith corresponding to said depressed simple selection button;
displaying said electronic mail creation screen with said pair provided thereon; and
after completion of creation of an electronic mail to be sent, transmitting said electronic mail to said electronic mail address.

12. The method as claimed in claim 7, wherein, in the case where a destination name cannot be obtained, only the e-mail address is stored.

## Patentansprüche

1. Faksimilegerät (100), das mit einer Funktion zum Empfangen und Senden von elektronischer Post bzw. von Email versehen ist und umfasst:
ein Email-Adressen-Extraktionsmittel zum Extrahieren einer eine Email-Adresse repräsentierenden Zeichenfolge aus Inhalten der über eine Kommunikationsleitung empfangenen Email; und
ein Speichermittel (6) zum Speichern der Zeichenfolge, die durch die Email-Adressen-Extraktionsmittel extrahiert wird; **dadurch gekennzeichnet, dass** es ferner umfasst:
ein Absendernamen-Extraktionsmittel, das konfiguriert ist, um eine Zeichenfolge, die einen Namen des Absenders der Email repräsentiert, aus den Inhalten der empfangenen Email zu extrahieren,
wobei das Speichermittel (6) konfiguriert ist, um die extrahierte Zeichenfolge, die den Namen des Absenders der Email repräsentiert, als einen Empfängernamen und in Zuordnung hierzu die gespeicherte extrahierte Zeichenfolge, die die Adresse der Email repräsentiert, zu speichern.

2. Faksimilegerät (100) nach Anspruch 1, wobei das Gerät ferner umfasst:
ein Anzeigemittel zum Anzeigen einer Gruppe von Email-Adressen, die in dem Speichermittel (6) gespeichert sind; und
ein Auswahlmittel zum Auswählen einer gewünschten Email-Adresse aus der Gruppe von Email-Adressen, die durch das Anzeigemittel angezeigt werden,
wobei das Anzeigemittel einen Email-Erzeugungsbildschirm anzeigt, wobei die ausgewählte Email-Adresse darauf bereitgestellt wird.

3. Faksimilegerät (100) nach Anspruch 1, wobei das Gerät ferner umfasst:
ein Anzeigemittel zum Anzeigen einer Gruppe von Email-Adressen sowie der ihnen zugeordneten Empfängernamen, die beide in dem Speichermittel gespeichert sind; und
ein Auswahlmittel zum Auswählen einer gewünschten Email-Adresse aus der Gruppe von Email-Adressen und eines ihr zugeordneten entsprechenden Empfängernamens,
wobei das Anzeigemittel einen Email-Erzeugungsbildschirm anzeigt, wobei die ausgewählte Email-Adresse und der ihr zugeordnete ausgewählte Empfängernamen darauf bereitgestellt werden.

4. Faksimilegerät (100) nach Anspruch 3, bei dem das Anzeigemittel den Empfängernamen für jede Email-Adresse anzeigt.

5. Faksimilegerät (100) nach Anspruch 4, wobei das Gerät ferner umfasst:
ein Zuordnungsmittel zum Zuordnen eines Paars aus der Email-Adresse und dem ihr zugeordneten Empfängernamen, die beide in dem Speichermittel (6) gespeichert sind, zu einem von mehreren einfachen Auswahlknöpfen,
wobei das Faksimilegerät (100) so beschaffen ist, dass es das Drücken des einen der mehreren einfachen Auswahlknöpfe detektiert und in Reaktion auf ein detektiertes Drücken Informationen über das Paar aus der Email-Adresse und dem ihr zugeordneten Empfängernamen, das dem gedrückten einfachen Auswahlknopf entspricht, detektiert und einen Email-Erzeugungsbildschirm mit dem darauf bereitgestellten Paar anzeigt, und
wobei das Faksimilegerät (100) konfiguriert ist, um nach Abschluss einer Erzeugung einer zu sendenden Email diese Email an die Email-Adresse zu senden.

6. Faksimilegerät (100) nach Anspruch 1, bei dem in dem Fall, in dem ein Empfängername durch das Absendernamen-Extraktionsmittel nicht erhalten werden kann, das Gerät (100) konfiguriert ist, um nur die Email-Adresse in dem Speichermittel (6) zu speichern.

7. Verfahren zum Steuern eines Faksimilegeräts (100), das mit einer Funktion zum Empfangen und Senden von elektronischer Post oder Email versehen ist, wobei das Verfahren die folgenden Schritte umfasst:
Extrahieren einer eine Email-Adresse repräsentierenden Zeichenfolge aus Inhalten der über eine Kommunikationsleitung empfangenen Email; und
Speichern der Zeichenfolge, die in dem Extraktionsschritt extrahiert wird; **dadurch gekennzeichnet, dass** es ferner umfasst:
Extrahieren einer Zeichenfolge, die einen Namen des Absenders der Email repräsentiert, aus den Inhalten der empfangenen Email,
wobei während des Speicherschrittes die extrahierte Zeichenfolge, die den Namen des Absenders der Email repräsentiert, als ein Empfängername gespeichert wird und die gespeicherte extrahierte Zeichenfolge, die die Email-Adresse repräsentiert, ihm zugeordnet wird.

8. Verfahren nach Anspruch 7, wobei das Verfahren ferner die folgenden Schritte umfasst:
Anzeigen einer Gruppe von Email-Adressen, die in dem Speicherschritt gespeichert werden;
Auswählen einer gewünschten Email-Adresse aus der Gruppe von Email-Adressen, die in dem Anzeigeschritt angezeigt werden; und
Anzeigen eines Email-Erzeugungsbildschirms, wobei die ausgewählte Email-Adresse darauf bereitgestellt wird.

9. Verfahren nach Anspruch 7, wobei das Verfahren ferner die folgenden Schritte umfasst:
Anzeigen einer Gruppe von Email-Adressen sowie der ihnen zugeordneten Empfängernamen, die beide in dem Speicherschritt gespeichert werden;
Auswählen einer gewünschten Email-Adresse aus der Gruppe von Email-Adressen und eines ihr zugeordneten entsprechenden Empfängernamens; und
Anzeigen eines Email-Erzeugungsbildschirms, wobei die ausgewählte Email-Adresse und der ihr zugeordnete ausgewählte Empfängername darauf bereitgestellt werden.

10. Verfahren nach Anspruch 9, bei dem in dem Schritt des Anzeigens der Gruppe von Email-Adressen sowie der Empfängernamen, die den jeweiligen Email-Adressen zugewiesen sind und in dem Speicherschritt gespeichert werden, der Empfängername für jede Email-Adresse angezeigt wird.

11. Verfahren nach Anspruch 10, wobei das Verfahren ferner die folgenden Schritte umfasst:
Zuordnen eines Paars aus der Email-Adresse und des ihr zugeordneten Empfängernamens, die beide in dem Speicherschritt gespeichert werden, zu einem von mehreren einfachen Auswahlknöpfen;
Detektieren des Drückens des einen der mehreren einfachen Auswahlknöpfe;
Auslesen von Informationen über das Paar aus der Email-Adresse und dem ihr zugeordneten Empfängernamen, das dem gedrückten einfachen Auswahlknopf entspricht;
Anzeigen des Email-Erzeugungsbildschirms, wobei das Paar darauf bereitgestellt wird; und
nach Abschluss der Erzeugung einer zu sendenden Email Senden der Email an diese Email-Adresse.

12. Verfahren nach Anspruch 7, bei dem in dem Fall, in dem ein Empfängername nicht erhalten werden kann, nur die Email-Adresse gespeichert wird.

## Revendications

1. Dispositif de télécopie (100) doté d'une fonction de réception et d'envoi d'un courrier électronique, comprenant :
un moyen d'extraction d'adresse de courrier électronique pour extraire une séquence de caractères représentant une adresse de courrier électronique du contenu du courrier électronique reçu au moyen d'une ligne de communication ; et
un moyen de stockage (6) pour stocker ladite séquence de caractères extraite par ledit moyen d'extraction d'adresse de courrier électronique ; **caractérisé par** le fait de comprendre en outre :
un moyen d'extraction de nom d'origine configuré pour extraire une séquence de caractères représentant un nom de l'origine du courrier électronique du contenu du courrier électronique reçu,
dans lequel ledit moyen de stockage (6) est configuré pour stocker ladite séquence de caractères extraite représentant le nom de l'origine du courrier électronique en tant que nom de destination et lui associer ladite séquence de caractères extraite stockée représentant l'adresse de courrier électronique.

2. Dispositif de télécopie (100) selon la revendication 1, ledit dispositif comprenant en outre :
un moyen d'affichage pour afficher un groupe d'adresses de courrier électronique stockées dans ledit moyen de stockage (6) ; et
un moyen de sélection pour sélectionner une adresse de courrier électronique souhaitée parmi ledit groupe d'adresses de courrier électronique affiché par ledit moyen d'affichage,
dans lequel ledit moyen d'affichage affiche un écran de création de courrier électronique avec ladite adresse de courrier électronique sélectionnée fournie sur celui-ci.

3. Dispositif de télécopie (100) selon la revendication 1, ledit dispositif comprenant en outre :
un moyen d'affichage pour afficher un groupe d'adresses de courrier électronique ainsi que les noms de destination associés à celles-ci, tous deux étant stockés dans ledit moyen de stockage ; et
un moyen de sélection pour sélectionner une adresse de courrier électronique souhaitée parmi ledit groupe d'adresses de courrier électronique et un nom de destination correspondant associé à celle-ci,
dans lequel ledit moyen d'affichage affiche un écran de création de courrier électronique avec ladite adresse de courrier électronique sélectionnée et ledit nom de destination sélectionné associé à celle-ci fournis sur celui-ci.

4. Dispositif de télécopie (100) selon la revendication 3, dans lequel ledit moyen d'affichage affiche ledit nom de destination par rapport à chaque adresse de courrier électronique.

5. Dispositif de télécopie (100) selon la revendication 4, ledit dispositif comprenant en outre :
un moyen d'enregistrement pour enregistrer une paire de ladite adresse de courrier électronique et d'un nom de destination associé à celle-ci, tous deux étant stockés dans ledit moyen de stockage (6), sur l'un d'une pluralité de boutons de sélection unique,
dans lequel ledit dispositif de télécopie (100) est agencé pour détecter l'enfoncement dudit un de la pluralité de boutons de sélection unique et, en réponse à un enfoncement détecté, lire les informations de ladite paire de ladite adresse de courrier électronique et dudit nom de destination associé à celle-ci correspondant audit bouton de sélection unique enfoncé et afficher un écran de création de courrier électronique avec ladite paire fournie sur celui-ci, et
dans lequel ledit dispositif de télécopie (100) est configuré de façon à ce que, après l'achèvement d'une création d'un courrier électronique devant être envoyé, ledit courrier électronique soit transmis à ladite adresse de courrier électronique.

6. Dispositif de télécopie (100) selon la revendication 1, dans lequel, dans le cas où un nom de destination ne peut pas être obtenu par ledit moyen d'extraction de nom d'origine, le dispositif (100) est configuré pour stocker uniquement l'adresse de courrier électronique dans ledit moyen de stockage (6).

7. Procédé de commande d'un dispositif de télécopie (100) doté d'une fonction de réception et d'envoi d'un courrier électronique, ledit procédé comprenant l'étape consistant à :
extraire une séquence de caractères représentant une adresse de courrier électronique du contenu du courrier électronique reçu au moyen d'une ligne de communication ; et
stocker ladite séquence de caractères extraite dans ladite étape d'extraction ; **caractérisé par** le fait de comprendre en outre :
l'extraction d'une séquence de caractères représentant un nom de l'origine du courrier électronique du contenu du courrier électronique reçu,
dans lequel pendant ladite étape de stockage, ladite séquence de caractères extraite représentant le nom de l'origine du courrier électronique est stockée en tant que nom de destination et ladite séquence de caractères extraite stockée représentant l'adresse de courrier électronique lui est associée.

8. Procédé selon la revendication 7, ledit procédé comprenant en outre les étapes consistant à :
afficher un groupe d'adresses de courrier électronique stockées dans ladite étape de stockage ;
sélectionner une adresse de courrier électronique souhaitée parmi ledit groupe d'adresses de courrier électronique affiché dans ladite étape d'affichage ; et
afficher un écran de création de courrier électronique avec ladite adresse de courrier électronique sélectionnée fournie sur celui-ci.

9. Procédé selon la revendication 7, ledit procédé comprenant en outre les étapes consistant à :
afficher un groupe d'adresses de courrier électronique ainsi que les noms de destination associés à celles-ci, tous deux étant stockés dans ladite étape de stockage ;
sélectionner une adresse de courrier électronique souhaitée parmi ledit groupe d'adresses de courrier électronique et un nom de destination correspondant associé à celle-ci ; et
afficher un écran de création de courrier électronique avec ladite adresse de courrier électronique sélectionnée et ledit nom de destination sélectionné associé à celle-ci fournis sur celui-ci.

10. Procédé selon la revendication 9, dans lequel, dans ladite étape d'affichage dudit groupe d'adresses de courrier électronique ainsi que des noms de destination associés aux adresses de courrier électronique respectives stockés dans ladite étape de stockage, ledit nom de destination est affiché par rapport à chaque adresse de courrier électronique.

11. Procédé selon la revendication 10, ledit procédé comprenant en outre les étapes consistant à :
enregistrer une paire de ladite adresse de courrier électronique et dudit nom de destination associé à celle-ci, tous deux étant stockés dans ladite étape de stockage, sur l'un d'une pluralité de boutons de sélection unique ;
détecter l'enfoncement dudit un de la pluralité de boutons de sélection unique ;
lire les informations de ladite paire de ladite adresse de courrier électronique et dudit nom de destination associé à celle-ci correspondant audit bouton de sélection unique enfoncé ;
afficher ledit écran de création de courrier électronique avec ladite paire fournie sur celui-ci ; et
après l'achèvement de la création d'un courrier électronique devant être envoyé, transmettre ledit courrier électronique à ladite adresse de courrier électronique.

12. Procédé selon la revendication 7, dans lequel, dans le cas où un nom de destination ne peut pas être obtenu, seule l'adresse de courrier électronique est stockée.
